# FASCICULE DE BREVET EUROPEEN

(11) **EP 3 763 320 B1**
(45) Date de publication et mention de la délivrance du brevet: **20.10.2021**
(21) Numéro de dépôt: 19185034.6
(22) Date de dépôt: 08.07.2019
(51) Int. Cl.: A61C 8/00

(54) **IMPLANT DENTAIRE AUTO-TARAUDANT AMELIORE**
VERBESSERTES SELBSTBOHRENDES ZAHNIMPLANTAT
IMPROVED SELF-TAPPING DENTAL IMPLANT

(43) Date de publication de la demande: 13.01.2021
(73) Titulaire: ANTHOGYR, 74700 Sallanches (FR)
(72) Inventeur: RICHARD, Hervé, 73590 Notre Dame de Bellecombe (FR)
(74) Mandataire: Cabinet Poncet

(56) Documents cités:
- EP-A1- 1 093 766
- EP-A1- 1 186 275
- FR-A1- 2 972 343
- FR-A1- 2 975 891

## Description

### DOMAINE TECHNIQUE DE L'INVENTION

La présente invention concerne le domaine de l'implantologie dentaire, et concerne plus particulièrement un implant dentaire auto-taraudant.

Lors de la mise en place d'un implant dans l'os maxillaire ou mandibulaire d'un patient, il est important d'obtenir une stabilité post-implantation (dite stabilité primaire) la meilleure possible afin de pouvoir mettre en charge ledit implant le plus vite possible, voire immédiatement, c'est-à-dire avant que l'os ait eu le temps de coloniser la surface endo-osseuse de l'implant.

La stabilité primaire d'un implant dépend notamment de la densité de l'os dans lequel il est implanté.

Lorsque l'os est de faible densité (classiquement de densité D3 ou D4 selon la classification de Misch), on réalise un trou cylindrique dans l'os maxillaire ou mandibulaire à l'aide d'un foret, trou dans lequel on insère ensuite la partie endo-osseuse d'un implant dentaire ayant un volume plus important que le volume du trou ménagé dans l'os. On peut par exemple recourir à un implant dentaire connu comprenant un corps d'implant s'étendant selon un axe longitudinal entre une extrémité coronaire et une extrémité apicale, ledit corps d'implant comportant une âme le long de laquelle s'étend un filetage hélicoïdal à au moins un filet, ladite âme étant effilée en direction de l'extrémité apicale sur au moins un tronçon de la longueur de l'implant. Un tel implant dentaire est par exemple décrit dans le document FR2972343 A1 ainsi que dans le document EP 1 624 826. L'implant dentaire a généralement une extrémité apicale à section transversale sensiblement égale à la section transversale du trou cylindrique. Lors de son insertion, l'implant dentaire compresse progressivement l'os en périphérie du trou ménagé dans l'os, de sorte que la stabilité primaire est augmentée.

Mais lorsqu'un tel implant dentaire est inséré dans un os de plus grande densité (classiquement de densité D1 ou D2 selon la classification de Misch), la densité de l'os rend celui-ci moins aisément compressible, de sorte que la pénétration de l'implant dentaire nécessite un couple de vissage beaucoup plus élevé, et parfois même trop élevé pour être supporté sans dommages par l'implant dentaire (notamment au niveau de sa connectique permettant son vissage par entraînement en rotation). On a alors généralement recours à l'utilisation d'un taraud pour munir le trou ménagé dans l'os d'un filetage interne correspondant sensiblement au filetage externe de l'implant dentaire, et ce préalablement à l'introduction de l'implant dentaire dans le trou ménagé dans l'os.

L'utilisation d'un taraud est toutefois longue et délicate. En effet, alors que le foret précédemment utilisé pour la réalisation du trou cylindrique était entraîné à plus de 1 000 tours par minute, le taraud ne doit être entraîné qu'à très faible vitesse de rotation (environ 50 tours par minute). Il importe donc que le praticien change la vitesse de son outil pour ne pas traverser accidentellement l'os maxillaire ou mandibulaire avec son taraud. L'étape de taraudage est rendue longue en raison de la faible vitesse d'entraînement en rotation du taraud, et est en outre rendue compliquée en raison de ce qu'il faut entraîner celui-ci dans un sens puis dans l'autre de façon alternée pour tarauder l'os de façon progressive sans rompre le taraud.

Pour éviter le recours à l'utilisation d'un taraud, on a pensé munir l'implant dentaire lui-même d'au moins une rainure de taraudage.

Le couple d'insertion par vissage demeure toutefois relativement élevé, voire trop élevé.

### EXPOSE DE L'INVENTION

Un problème proposé par la présente invention est de fournir un implant dentaire apte à être inséré dans un os de faible densité en compressant l'os pour une bonne stabilité primaire, mais également apte à être inséré dans un os de plus grande densité sans pour autant avoir besoin de recourir à une opération préalable de taraudage du trou ménagé dans l'os.

Pour atteindre ces objets ainsi que d'autres, l'invention propose un implant dentaire comprenant un corps d'implant s'étendant selon un axe longitudinal entre une extrémité coronaire et une extrémité apicale, ledit corps d'implant comportant une âme le long de laquelle s'étend un filetage hélicoïdal ayant au moins un filet, ladite âme étant effilée en direction de l'extrémité apicale sur au moins un tronçon de la longueur de l'implant, dans lequel :
- dans le filetage sont ménagées au moins deux rainures de taraudage interrompant ledit au moins un filet, de sorte que ledit au moins un filet comporte une succession d'arcs de filet consécutifs, un arc de filet étant séparé d'un arc de filet qui lui est consécutif par l'une desdites au moins deux rainures de taraudage,
- chaque arc de filet comporte une surface apicale orientée vers l'extrémité apicale de l'implant dentaire et une surface coronaire orientée vers l'extrémité coronaire de l'implant dentaire,
- chaque arc de filet comporte une surface latérale périphérique reliant la surface apicale et la surface coronaire dudit arc de filet, et se développant depuis une extrémité d'attaque jusqu'à une extrémité de fuite ;
selon l'invention, dans ledit au moins un tronçon de l'implant dentaire dans lequel l'âme est effilée, au moins un arc de filet présente un retrait radial tel que la surface latérale périphérique dudit au moins un arc de filet présentant un retrait radial est en tous points située à une distance de l'axe longitudinal qui est inférieure à la distance maximale par rapport à l'axe longitudinal de la surface latérale périphérique d'un arc de filet qui est consécutif audit au moins un arc de filet présentant un retrait radial.

Du fait du retrait radial effectué sur sa surface latérale périphérique, lors du vissage de l'implant dentaire dans le trou ménagé dans l'os, la surface latérale périphérique dudit arc de filet présentant un retrait radial ne vient pas frotter contre la matière osseuse contre laquelle a préalablement frotté la surface latérale périphérique de l'arc de filet qui lui est consécutif et qui pénètre juste avant lui dans le trou. Le couple d'insertion par vissage dans l'os s'en trouve ainsi diminué, sans toutefois que les fonctions de taraudage et de vissage dans l'os soient affectées.

Naturellement, cette diminution du couple d'insertion s'accroît en prévoyant plusieurs arcs de filet présentant un retrait radial. Ledit au moins un filet peut ainsi avantageusement présenter une alternance d'arcs de filet présentant un retrait radial et d'arcs de filet dépourvus de retrait radial.

Pour favoriser une orientation satisfaisante de l'implant dentaire lors de son insertion par vissage dans le trou, on peut de préférence prévoir que :
- l'implant dentaire comprend une pluralité d'arcs de filet présentant un retrait radial,
- les arcs de filet présentant un retrait radial sont répartis de façon équilibrée tout autour de l'axe longitudinal.

On favorise ainsi une orientation de l'implant dentaire avec son axe longitudinal sensiblement coaxial à l'axe d'allongement du trou ménagé dans l'os.

Pour une fabrication simplifiée par usinage, ledit au moins un arc de filet peut avantageusement présenter un retrait radial tel que tous les points de sa surface latérale périphérique sont situés sensiblement à une même distance de l'axe longitudinal.

De bons résultats ont été obtenus en prévoyant que le retrait dudit au moins un arc de filet présentant un retrait radial est avantageusement inférieur ou égal à 30% de la hauteur maximale (prise dans un plan sensiblement perpendiculaire à l'axe longitudinal) de la surface apicale au voisinage de l'extrémité de fuite ou d'attaque d'un arc de filet qui est consécutif audit au moins un arc de filet présentant un retrait radial.

Un tel retrait est un bon compromis pour limiter les frottements en périphérie de l'implant sur l'os (et donc pour réduire le couple d'insertion par vissage) tout en procurant un appui satisfaisant de l'implant sur la matière osseuse par le biais des surfaces apicale et coronaire des arcs de filet.

Avantageusement, on peut prévoir que :
- dans une partie de la longueur filetée de l'implant dentaire, l'implant dentaire comporte un tronçon apical, se développant depuis l'extrémité apicale en direction de l'extrémité coronaire,
- le tronçon apical est dépourvu d'arcs de filet présentant un retrait radial.

Un tel tronçon apical procure un bon contact avec l'os en périphérie du trou (voire une bonne pénétration dans celui-ci), de façon à obtenir une bonne avance de l'implant dentaire par vissage dans le trou.

De préférence, le filetage peut comprendre plusieurs filets, de préférence deux.

Pour un bon équilibrage de l'implant dentaire, on peut avantageusement prévoir que dans le filetage sont ménagées trois rainures de taraudage.

Avantageusement, lesdites au moins deux rainures de taraudage s'étendent sur plus de la moitié de la longueur filetée de l'implant dentaire. On peut ainsi prévoir une alternance d'arcs de filet présentant un retrait radial et d'arcs de filet dépourvus de retrait radial sur plus de la moitié de l'implant dentaire, ce qui permet une réduction de l'effort d'insertion par vissage de l'implant sur plus de la moitié de sa course de vissage.

De préférence, lesdites au moins deux rainures de taraudage peuvent s'étendre en hélice. Une telle forme des rainures de taraudage permet de répartir de façon plus régulière une alternance d'arcs de filet présentant un retrait radial et d'arcs de filet dépourvus de retrait radial. L'implant dentaire bénéficie alors d'un meilleur équilibrage lors de son insertion par vissage.

Avantageusement, l'âme peut être effilée selon un angle de cône.

Avantageusement, le filetage peut être effilé sur tout ou partie de la longueur de l'implant dentaire, de préférence selon un angle de cône. En alternative ou en complément, le filetage peut être cylindrique sur tout ou partie de la longueur de l'implant dentaire.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une vue de côté d'un mode de réalisation particulier d'implant dentaire selon l'invention, dans une première orientation autour de l'axe longitudinal ;
[Fig.2] La figure 2 est une vue de côté de l'implant dentaire de la figure 1, dans une deuxième orientation autour de l'axe longitudinal ;
[Fig.3] La figure 3 est une vue de côté de l'implant dentaire de la figure 1, dans une troisième orientation autour de l'axe longitudinal ;
[Fig.4] La figure 4 est une vue en perspective de l'implant dentaire de la figure 1 ;
[Fig.5] La figure 5 est la vue de la figure 3 sur laquelle est illustrée en traits discontinues l'enveloppe extérieur de l'implant dentaire en l'absence de retrait radial sur ses arcs de filet ;
[Fig.6] La figure 6 est une vue partielle en coupe longitudinale d'un arc de filetage de l'implant dentaire de la figure 1 ; et
[Fig.7] La figure 7 est une vue partielle de côté de l'implant dentaire de la figure 1.

### DESCRIPTION DES MODES DE REALISATION PREFERES

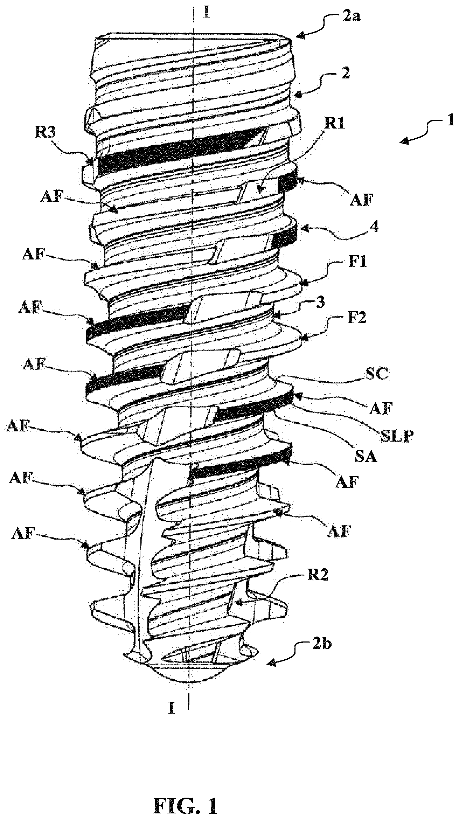

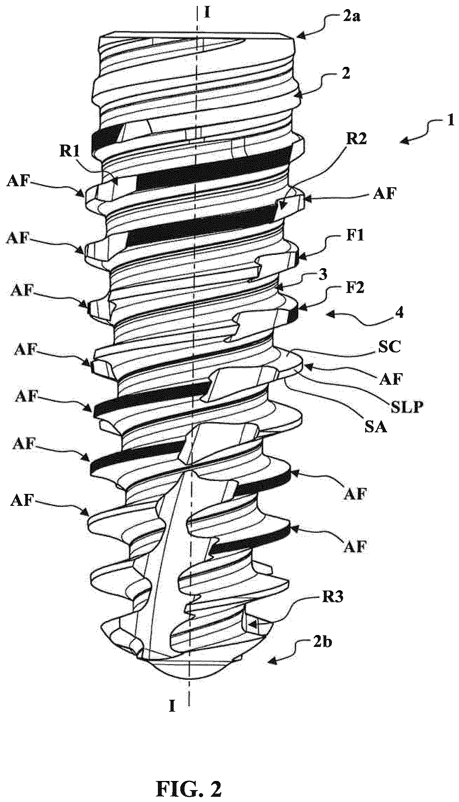

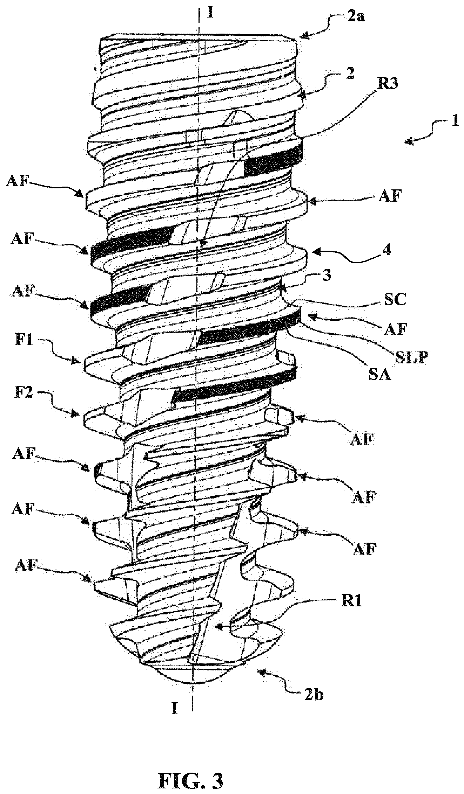

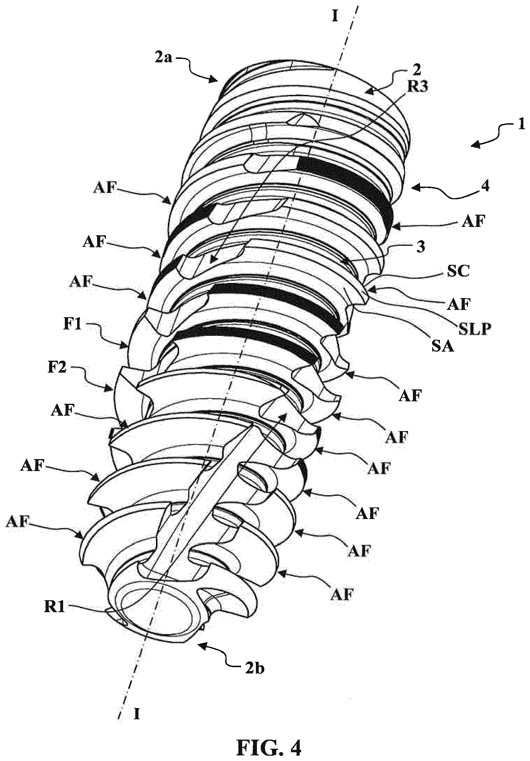

Sur les figures 1 à 7 est illustré un mode de réalisation particulier d'implant dentaire 1 selon l'invention.

Comme illustré sur les figures 1 à 5, l'implant dentaire 1 comprend un corps d'implant 2 s'étendant selon un axe longitudinal I-I entre une extrémité coronaire 2a et une extrémité apicale 2b. Le corps d'implant 2 comporte une âme 3 le long de laquelle s'étend un filetage 4 hélicoïdal à au moins un filet. En l'espèce, le filetage 4 comprend ici deux filets F1 et F2.

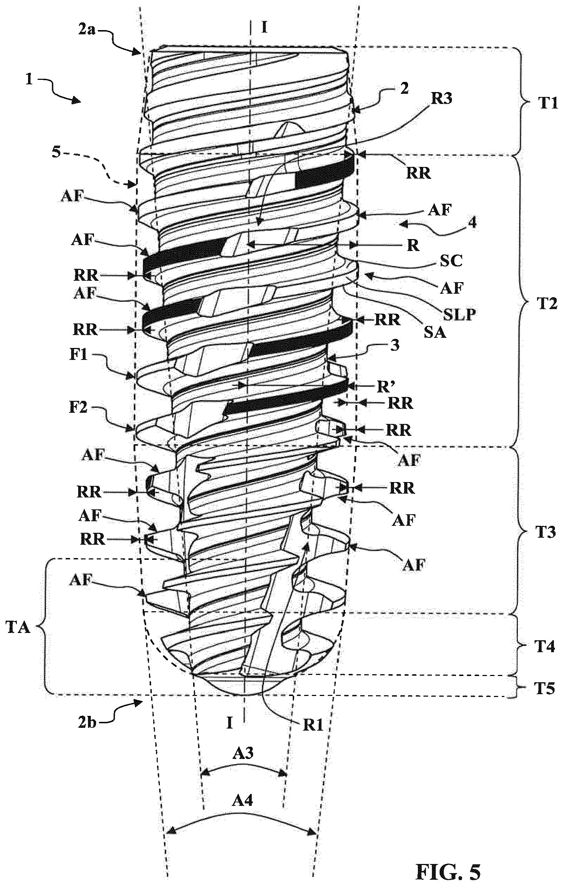

Sur la figure 5, on a illustré au moyen de traits discontinus l'enveloppe externe 5 du corps d'implant 2 ou enveloppe des surfaces latérales périphériques des filets F1 et F2. On a également illustré au moyen de traits discontinus l'enveloppe de l'âme 3. On voit ainsi que le corps d'implant 2 comprend cinq tronçons T1 à T5 depuis son extrémité coronaire 2a jusqu'à son extrémité apicale 2b.

Dans le tronçon T1, l'âme 3 est sensiblement cylindrique tandis que le filetage 4 est conique selon une conicité orientée vers l'extrémité coronaire 2a. La hauteur des filets F1 et F2 (prise dans un plan sensiblement perpendiculaire à l'axe longitudinal I-I) diminue ainsi en direction de l'extrémité coronaire 2a. La diminution progressive de la section transversale de l'implant dentaire 1 au voisinage de son extrémité coronaire 2a permet de tenir compte du volume d'os qui s'amenuise au voisinage de la crête osseuse de l'os maxillaire ou mandibulaire selon la direction vestibulo-palatine, pour une intégration esthétique de l'implant dentaire 1.

Dans le tronçon T2, l'âme 3 s'effile en direction de l'extrémité apicale 2b, en étant conique selon une conicité orientée vers l'extrémité apicale 2b, tandis que le filetage 4 est sensiblement cylindrique. La hauteur des filets F1 et F2 (prise dans un plan sensiblement perpendiculaire à l'axe longitudinal I-I) augmente ainsi en direction de l'extrémité apicale 2b.

Dans le tronçon T3, l'âme 3 est également conique. Sa conicité est la même que celle dans le tronçon T2. Le filetage 4 est également effilé en direction de l'extrémité apicale 2b, en étant conique selon une conicité orientée vers l'extrémité apicale 2b. La variation de la hauteur du filetage 4 dépend de la relation entre les angles de cône respectifs A3 et A4 de l'âme 3 et du filetage 4 :
- lorsque l'angle de cône A3 de l'âme 3 est supérieur à l'angle de cône A4 du filetage 4, la hauteur du filetage 4 augmente en direction de l'extrémité apicale 2b,
- lorsque l'angle de cône A3 de l'âme 3 est égal à l'angle de cône A4 du filetage 4, la hauteur du filetage 4 est sensiblement constante en direction de l'extrémité apicale 2b,
- lorsque l'angle de cône A3 de l'âme 3 est inférieur à l'angle de cône A4 du filetage 4, la hauteur du filetage 4 diminue en direction de l'extrémité apicale 2b.

Dans le mode de réalisation particulier illustré sur les figures, les angles de cône A3 et A4 sont sensiblement égaux.

Dans le tronçon T4, l'âme 3 est toujours conique et s'effile vers l'extrémité apicale 2b. Sa conicité est la même que celle dans les tronçons T2 et T3. Le filetage 4 est quant à lui arrondi et présente une hauteur sensiblement nulle à la jonction des tronçons T4 et T5.

Le tronçon T5 est convexe, en forme de demi-lentille. Il est tout à fait optionnel.

L'âme 3 est ainsi effilée en direction de l'extrémité apicale 2b sur au moins un tronçon de la longueur de l'implant dentaire 1, en l'espèce sur les tronçons T2 à T4.

Comme on le voit sur les figures 1 à 3 qui montrent l'implant dentaire 1 dans trois orientations différentes, dans le filetage 4 sont ménagées au moins deux rainures de taraudage. En l'espèce, on compte trois rainures de taraudage R1 à R3 interrompant les filets F1 et F2. Les filets F1 et F2 comportent ainsi respectivement une succession d'arcs de filet AF consécutifs, un arc de filet AF étant séparé d'un arc de filet AF qui lui est consécutif par l'une desdites au moins deux rainures de taraudage R1, R2 ou R3. Sur les figures, seule une partie des arcs de filets est repérée par la référence AF, pour ne pas nuire à la clarté de la représentation.

Les rainures de taraudage R1 à R3 s'étendent sur plus de la moitié (en l'espèce environ 85 %) de la longueur filetée de l'implant dentaire 1.

Les rainures R1 à R3 ne sont pas droites mais s'étendent en hélice le long de l'implant dentaire 1, autour de l'axe longitudinal I-I.

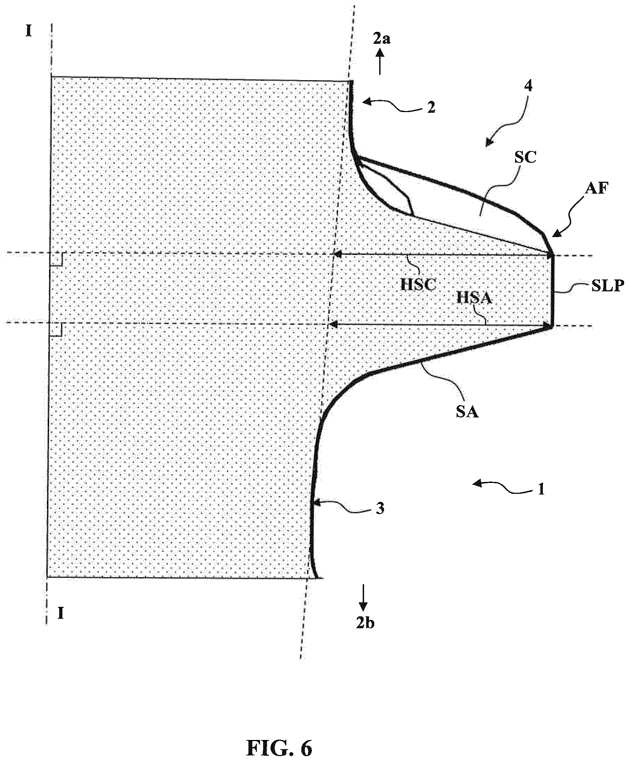

Comme on le voit mieux sur la figure 6, chaque arc de filet AF comporte une surface apicale SA orientée vers l'extrémité apicale 2b de l'implant dentaire 1, et présentant une hauteur HSA (prise dans un plan sensiblement perpendiculaire à l'axe longitudinal I-I). Chaque arc de filet AF comporte également une surface coronaire SC orientée vers l'extrémité coronaire 2a de l'implant dentaire 1, et présentant une hauteur HSC (prise dans un plan sensiblement perpendiculaire à l'axe longitudinal I-I). Chaque arc de filet AF comporte une surface latérale périphérique SLP reliant la surface apicale SA et la surface coronaire SC dudit arc de filet AF.

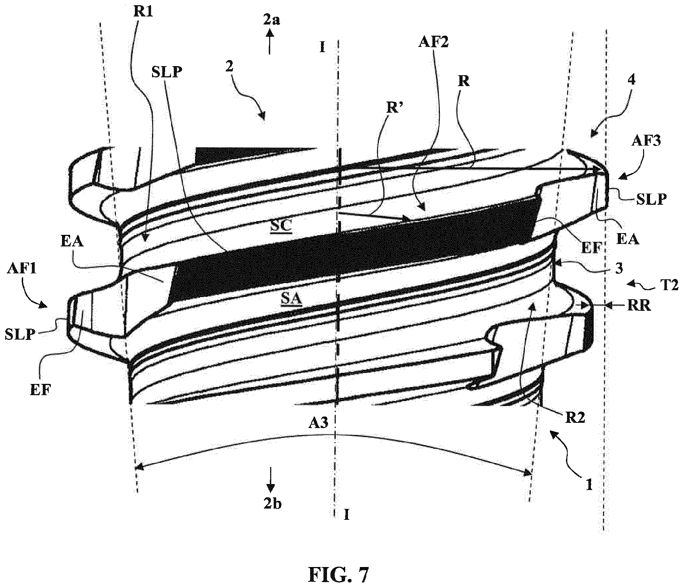

Comme on le voit mieux sur la figure 7, la surface latérale périphérique SLP d'un arc de filet AF se développe en hélice depuis une extrémité d'attaque EA jusqu'à une extrémité de fuite EF. L'extrémité d'attaque EA est destinée à pénétrer en premier dans l'os lors de l'insertion par vissage de l'implant dentaire 1 dans l'os, et est destinée à entailler l'os pour le tarauder.

Dans les tronçons T2 et T3 de l'implant dentaire 1, dans lesquels l'âme 3 est effilée, des arcs de filet AF (dont la surface latérale périphérique SLP est colorée en noir afin de les repérer) présentent un retrait radial RR tel que les surfaces latérales périphériques SLP (en noir) desdits arc de filet AF présentant un retrait radial RR sont en tous points situées à une distance de l'axe longitudinal I-I qui est inférieure à la distance maximale par rapport à l'axe longitudinal I-I de la surface latérale périphérique SLP d'un arc de filet AF qui est consécutif d'un arc de filet AF présentant un retrait radial RR.

Les retraits radiaux RR de certains arcs de filet sont bien mis en évidence sur la figure 5 au moyen de l'enveloppe extérieure 5 de l'implant dentaire 1.

Cette caractéristique est mieux mise en évidence sur la figure 7 à l'aide de trois arcs de filets AF1, AF2 et AF3 situés dans le tronçon T2. Les arcs de filet AF1 et AF2 sont séparés l'un de l'autre par la rainure de taraudage R1, tandis que les arcs de filet AF2 et AF3 sont séparés l'un de l'autre par la rainure de taraudage R2. Les arcs de filet AF1 et AF3 sont ainsi consécutifs à l'arc de filet AF2.

Le filetage 4 étant cylindrique dans le tronçon T2, les surfaces latérales périphériques SLP des arcs de filets AF1 et AF3 sont situées à une distance constante de l'axe longitudinal I-I égale au rayon R du tronçon T2 cylindrique. L'arc de filet AF2 présente quant à lui un retrait radial RR qui fait que sa surface latérale périphérique SLP (noircie pour faciliter la compréhension du lecteur), est située en tous points à une distance inférieure au rayon R vis-à-vis de l'axe longitudinal I-I. De façon plus précise, l'arc de filet AF2 présente un retrait radial tel que tous les points de sa surface latérale périphérique SLP sont situés sensiblement à une même distance R' de l'axe longitudinal I-I, avec R' inférieur à R.

Ainsi, lors de l'insertion par vissage de l'implant dentaire 1 dans un trou ménagé dans l'os, le filet AF1 entaille l'os, compresse l'os à l'écart de l'axe longitudinal I-I, et laisse derrière lui un chemin hélicoïdal dans lequel pénètre ensuite, du fait de la rotation de l'implant dentaire 1, l'arc de filet AF2. Du fait de son retrait radial, la surface latérale périphérique SLP de l'arc de filet AF2 ne viendra pas frotter contre l'os qu'a préalablement conformé la surface latérale périphérique SLP de l'arc de filet AF1. Le couple d'insertion de l'implant dentaire 1 dans l'os est ainsi réduit.

Les surfaces apicale et coronaire de l'arc de filet AF2 viendront en revanche frotter contre l'os qu'ont préalablement conformé les surfaces apicale et coronaire de l'arc de filet AF1 et maintiennent donc une bonne stabilité de l'implant dentaire selon l'axe longitudinal I-I.

Une construction similaire avec un retrait radial RR est également prévue dans une partie du tronçon T3, le retrait radial RR se faisant cette fois par rapport à l'enveloppe externe 5 qui est tronconique.

Pour un bon compromis entre réduction du couple d'insertion et stabilité de l'implant dentaire selon l'axe longitudinal I-I, le retrait radial RR de l'arc de filet AF2 est inférieur ou égal à 30% de la hauteur HSA maximale de la surface apicale SA au voisinage de l'extrémité de fuite EF de l'arc de filet AF1 consécutif, ou inférieur ou égal à 30% de la hauteur HSA maximale de la surface apicale SA au voisinage de l'extrémité d'attaque EA de l'arc de filet AF3 consécutif.

Pour procurer un retrait radial RR à un arc de filet AF, on peut par exemple effectuer une retouche dudit arc de filet AF au moyen d'une fraise venant rogner radialement l'arc de filet AF.

Dans le mode de réalisation illustré sur les figures, les filets F1 et F2 présentent une alternance d'arcs de filet AF présentant un retrait radial RR et d'arcs de filet AF dépourvus de retrait radial RR. En d'autres termes, chaque arc de filet AF présentant un retrait radial RR est précédé et suivi par des arcs de filet AF dépourvus de retrait radial RR.

L'implant dentaire 1 comprend une pluralité d'arcs de filet AF présentant un retrait radial RR, et on constate que les arcs de filet AF présentant un retrait radial sont répartis de façon équilibrée tout autour de l'axe longitudinal I-I. Cela favorise une bonne coaxialité de l'axe longitudinal 1-1 de l'implant dentaire 1 avec l'axe de forage du trou ménagé dans l'os.

Sur la figure 5, on constate que l'implant dentaire 1 comporte un tronçon apical TA, se développant depuis l'extrémité apicale 2b en direction de l'extrémité coronaire 2a, et qui est dépourvu d'arcs de filet AF présentant un retrait radial RR. Ici, le tronçon apical TA comporte la totalité des tronçons T4 et T5, ainsi qu'une partie du tronçon T3.

La présente invention n'est pas limitée aux modes de réalisation qui ont été explicitement décrits, mais elle en inclut les diverses variantes contenues dans la portée des revendications ci-après.

## Revendications

1. Implant dentaire (1) comprenant un corps d'implant (2) s'étendant selon un axe longitudinal (I-I) entre une extrémité coronaire (2a) et une extrémité apicale (2b), ledit corps d'implant (2) comportant une âme (3) le long de laquelle s'étend un filetage (4) hélicoïdal ayant au moins un filet (F1, F2), ladite âme (3) étant effilée en direction de l'extrémité apicale (2b) sur au moins un tronçon (T2, T3, T4) de la longueur de l'implant dentaire (1), dans lequel :
- dans le filetage (4) sont ménagées au moins deux rainures de taraudage (R1-R3) interrompant ledit au moins un filet (F1, F2), de sorte que ledit au moins un filet (F1, F2) comporte une succession d'arcs de filet (AF) consécutifs, un arc de filet (AF) étant séparé d'un arc de filet (AF) qui lui est consécutif par l'une desdites au moins deux rainures de taraudage (R1-R3),
- chaque arc de filet (AF) comporte une surface apicale (SA) orientée vers l'extrémité apicale (2b) de l'implant dentaire (1) et une surface coronaire (SC) orientée vers l'extrémité coronaire (2a) de l'implant dentaire (1),
- chaque arc de filet (AF) comporte une surface latérale périphérique (SLP) reliant la surface apicale (SA) et la surface coronaire (SC) dudit arc de filet (AF), et se développant depuis une extrémité d'attaque (EA) jusqu'à une extrémité de fuite (EF),
**caractérisé en ce que**, dans ledit au moins un tronçon (T2, T3, T4) de l'implant dentaire (1) dans lequel l'âme (3) est effilée, au moins un arc de filet (AF) présente un retrait radial (RR) tel que la surface latérale périphérique (SLP) dudit au moins un arc de filet (AF) présentant un retrait radial (RR) est en tous points située à une distance (R') de l'axe longitudinal (I-I) qui est inférieure à la distance maximale (R) par rapport à l'axe longitudinal (I-I) de la surface latérale périphérique (SLP) d'un arc de filet (AF) qui est consécutif audit au moins un arc de filet (AF) présentant un retrait radial (RR).

2. Implant dentaire (1) selon la revendication 1, **caractérisé en ce que** ledit au moins un filet (F1, F2) présente une alternance d'arcs de filet (AF) présentant chacun un retrait radial (RR) et d'arcs de filet (AF) dépourvus de retrait radial (RR).

3. Implant dentaire (1) selon l'une des revendications 1 ou 2, **caractérisé en ce que** :
- l'implant dentaire (1) comprend une pluralité d'arcs de filet (AF) présentant un retrait radial (RR),
- les arcs de filet (AF) présentant un retrait radial (RR) sont répartis de façon
équilibrée tout autour de l'axe longitudinal (I-I).

4. Implant dentaire (1) selon l'une quelconque des
revendications 1 à 3, **caractérisé en ce que** ledit au moins un arc de filet (AF) présente un retrait radial (RR) tel que tous les points de sa surface latérale périphérique (SLP) sont situés sensiblement à une même distance (R') de l'axe longitudinal (I-I).

5. Implant dentaire (1) selon l'une quelconque des
revendications 1 à 4, **caractérisé en ce que** le retrait radial (RR) dudit au moins un arc de filet (AF) présentant un retrait radial (RR) est inférieur ou égal à 30% de la hauteur maximale de la surface apicale (HSA) au voisinage de l'extrémité de fuite (EF) ou d'attaque (EA) d'un arc de filet (AF) qui est consécutif audit au moins un arc de filet (AF) présentant un retrait radial (RR).

6. Implant dentaire (1) selon l'une quelconque des
revendications 1 à 5, **caractérisé en ce que** :
- dans une partie de la longueur filetée de l'implant dentaire (1), l'implant dentaire (1) comporte un tronçon apical (TA), se développant depuis l'extrémité apicale (2b) en direction de l'extrémité coronaire (2a),
- le tronçon apical (TA) est dépourvu d'arcs de filet (AF) présentant un retrait
radial (RR).

7. Implant dentaire (1) selon l'une quelconque des
revendications 1 à 6, **caractérisé en ce que** le filetage (4) comprend plusieurs filets (F1, F2), de préférence deux.

8. Implant dentaire (1) selon l'une quelconque des
revendications 1 à 7, **caractérisé en ce que** dans le filetage (4) sont ménagées trois rainures de taraudage (R1-R3).

9. Implant dentaire (1) selon l'une quelconque des
revendications 1 à 8, **caractérisé en ce que** lesdites au moins deux rainures de taraudage (R1-R3) s'étendent sur plus de la moitié de la longueur filetée de l'implant dentaire (1).

10. Implant dentaire (1) selon l'une quelconque des
revendications 1 à 9, **caractérisé en ce que** lesdites au moins deux rainures de taraudage (R1-R3) s'étendent en hélice.

11. Implant dentaire (1) selon l'une quelconque des
revendications 1 à 10, **caractérisé en ce que** l'âme (3) est effilée selon un angle de cône (A3).

12. Implant dentaire (1) selon l'une quelconque des
revendications 1 à 11, **caractérisé en ce que** le filetage (4) est effilé, de préférence selon un angle de cône (A4).

13. Implant dentaire (1) selon l'une quelconque des
revendications 1 à 11, **caractérisé en ce que** le filetage (4) est cylindrique.

## Patentansprüche

1. Zahnimplantat (1), umfassend einen Implantatkörper (2), der sich entlang einer Längsachse (I-I) zwischen einem koronalen Ende (2a) und einem apikalen Ende (2b) erstreckt, wobei besagter Implantatkörper (2) einen Kern (3) mit einem sich längs entlang davon erstreckenden spiralförmigen Gewinde (4) aufweist, das mindestens einen Gewindegang (F1, F2) hat, wobei besagter Kern (3) in Richtung des apikalen Endes (2b) über zumindest einen Abschnitt (T2, T3, T4) der Länge des Zahnimplantats (1) verjüngt ist, wobei:
- in dem Gewinde (4) mindestens zwei Gewindeschneidnuten (R1-R3) ausgebildet sind, die besagten mindestens einen Gewindegang (F1, F2) so unterbrechen, dass besagter mindestens eine Gewindegang (F1, F2) eine Folge von aufeinander folgenden Gewindebögen (AF) aufweist, wobei ein Gewindebogen (AF) von einem darauf folgenden Gewindebogen (AF) durch eine besagter mindestens zwei Gewindeschneidnuten (R1-R3) getrennt ist,
- jeder Gewindebogen (AF) eine apikale Oberfläche (SA), orientiert in Richtung des apikalen Endes (2b) des Zahnimplantats (1), und eine koronale Oberfläche (SC), orientiert in Richtung des koronalen Ende (2a) des Zahnimplantats (1) aufweist,
- jeder Gewindebogen (AF) eine periphere Seitenoberfläche (SLP) aufweist, die die apikale Oberfläche (SA) und die koronale Oberfläche (SC) besagten Gewindebogens (AF) verbindet, und sich von einem vorderen Ende (EA) bis zu einem hinteren Ende (EF) entwickelt,
**dadurch gekennzeichnet, dass** in besagtem zumindest einem Abschnitt (T2, T3, T4) des Zahnimplantats (1), in dem der Kern (3) verjüngt ist, mindestens ein Gewindebogen (AF) eine radiale Verringerung (RR) präsentiert, beispielsweise, so dass die periphere Seitenoberfläche (SLP) besagten mindestens einen Gewindebogens (AF) eine radiale Verringerung (RR) präsentiert, die an allen Punkten zu der Längsachse (I-I) in einem Abstand (R') angeordnet ist, der kleiner ist als der maximale Abstand (R) der peripheren Seitenoberfläche (SLP) zu der Längsachse (I-I) eines Gewindebogens (AF), der auf besagten mindestens einen Gewindebogen folgt, der eine radiale Verringerung (RR) präsentiert.

2. Zahnimplantat (1) nach Anspruch 1, **dadurch gekennzeichnet, dass** besagter mindestens eine Gewindegang (F1, F2) einen Wechsel zwischen den Gewindebögen (AF), der jeweils eine radiale Verringerung (RR) präsentieren, und Gewindebögen (AF) ohne radiale Verringerung (RR) präsentiert.

3. Zahnimplantat (1) nach einem der Ansprüche 1 oder 2, **dadurch gekennzeichnet, dass**:
- das Zahnimplantat (1) eine Mehrzahl an Gewindebögen (AF), präsentierend eine radiale Verringerung (RR), umfasst,
- die, eine radiale Verringerung (RR) präsentierenden, Gewindebögen (AF) gleichmäßig um die Längsachse (I-I) herum verteilt sind.

4. Zahnimplantat (1) nach einem der Ansprüche 1 bis 3, **dadurch gekennzeichnet, dass** besagter mindestens eine Gewindebogen (AF) eine radiale Verringerung (RR) präsentiert, beispielsweise, so dass alle Punkte seiner peripheren Seitenoberfläche (SLP) im Wesentlichen im gleichen Abstand (R') von der Längsachse (I-I) angeordnet sind.

5. Zahnimplantat (1) nach einem der Ansprüche 1 bis 4, **dadurch gekennzeichnet, dass** die radiale Verringerung (RR) besagten mindestens eines Gewindebogens (AF) eine radiale Verringerung (RR) präsentiert, die kleiner als oder gleich 30% der maximalen Höhe der apikalen Oberfläche (HSA) benachbart des hinteren (EF) oder vorderen (EA) Endes eines Gewindebogens (AF) ist, der besagtem mindestens einem Gewindebogen (AF) folgt, der eine radiale Verringerung (RR) präsentiert.

6. Zahnimplantat (1) nach einem der Ansprüche 1 bis 5, **dadurch gekennzeichnet, dass**:
- in einem Teil der Gewindelänge des Zahnimplantates (1), das Zahnimplantat (1) einen apikalen Abschnitt (TA) aufweist, das sich von dem apikalen Ende (2b) in Richtung der koronalen Endes (2a) entwickelt,
- der apikale Abschnitt (TA) ohne Gewindebögen (AF) ist, die eine radiale Verringerung (RR) präsentieren.

7. Zahnimplantat (1) nach einem der Ansprüche 1 bis 6, **dadurch gekennzeichnet, dass** das Gewinde (4) mehrere, vorzugsweise zwei Gewindegänge (F1, F2) umfasst.

8. Zahnimplantat (1) nach einem der Ansprüche 1 bis 7, **dadurch gekennzeichnet, dass** im Gewinde (4) drei Gewindeschneidnuten (R1-R3) ausgebildet sind.

9. Zahnimplantat (1) nach einem der Ansprüche 1 bis 8, **dadurch gekennzeichnet, dass** sich mindestens zwei Gewindeschneidnuten (R1-R3) über mehr als die Hälfte der Gewindelänge des Zahnimplantates (1) erstrecken.

10. Zahnimplantat (1) nach einem der Ansprüche 1 bis 9, **dadurch gekennzeichnet, dass** sich die mindestens zwei Gewindeschneidnuten (R1-R3) spiralförmig erstrecken.

11. Zahnimplantat (1) nach einem der Ansprüche 1 bis 10, **dadurch gekennzeichnet, dass** sich der Kern (3) gemäß eines Konuswinkels (A3) verjüngt.

12. Zahnimplantat (1) nach einem der Ansprüche 1 bis 11, **dadurch gekennzeichnet, dass** sich das Gewinde (4) verjüngt, vorzugsweise gemäß eines Konuswinkels (A4).

13. Zahnimplantat (1) nach einem der Ansprüche 1 bis 11, **dadurch gekennzeichnet, dass** das Gewinde (4) zylindrisch ist.

## Claims

1. Dental implant (1) comprising an implant body (2) extending along a longitudinal axis (I-I) between a coronal end (2a) and an apical end (2b), said implant body (2) having a core (3), along which there extends a helical threading (4) having at least one thread (F1, F2), said core (3) being tapered in the direction of the apical end (2b) over at least one segment (T2, T3, T4) of the length of the dental implant (1), in which:
- at least two tapping grooves (R1-R3) are formed in the threading (4) and interrupt said at least one thread (F1, F2), such that said at least one thread (F1, F2) has a succession of consecutive thread arcs (AF), a thread arc (AF) being separated from a thread arc (AF) consecutive to it by one of said at least two tapping grooves (R1-R3),
- each thread arc (AF) has an apical surface (SA) oriented towards the apical end (2b) of the dental implant (1) and a coronal surface (SC) oriented towards the coronal end (2a) of the dental implant (1),
- each thread arc (AF) has a peripheral lateral surface (SLP) connecting the apical surface (SA) and the coronal surface (SC) of said thread arc (AF) and developing from a leading end (EA) to a trailing end (EF),
**characterized in that**, in said at least one segment (T2, T3, T4) of the dental implant (1) in which the core (3) is tapered, at least one thread arc (AF) has a radial setback (RR), such that the peripheral lateral surface (SLP) of said at least one thread arc (AF) having a radial setback (RR) is at all points situated at a distance (R' ) from the longitudinal axis (I-I) that is less than the maximum distance (R), from the longitudinal axis (I-I), of the peripheral lateral surface (SLP) of a thread arc (AF) which is consecutive to said at least one thread arc (AF) having a radial setback (RR) .

2. Dental implant (1) according to Claim 1, **characterized in that** said at least one thread (F1, F2) has an alternation of thread arcs (AF) that each have a radial setback (RR) and thread arcs (AF) that are without a radial setback (RR).

3. Dental implant (1) according to either of Claims 1 and 2, **characterized in that**:
- the dental implant (1) comprises a plurality of thread arcs (AF) having a radial setback (RR),
- the thread arcs (AF) having a radial setback (RR) are distributed in a balanced manner all around the longitudinal axis (I-I).

4. Dental implant (1) according to any one of Claims 1 to 3, **characterized in that** said at least one thread arc (AF) has a radial setback (RR) such that all the points of its peripheral lateral surface (SLP) are situated substantially at the same distance (R') from the longitudinal axis (I-I) .

5. Dental implant (1) according to any one of Claims 1 to 4, **characterized in that** the radial setback (RR) of said at least one thread arc (AF) having a radial setback (RR) is less than or equal to 30% of the maximum height of the apical surface (HSA) in the vicinity of the trailing end (EF) or leading end (EA) of a thread arc (AF) which is consecutive to said at least one thread arc (AF) having a radial setback (RR).

6. Dental implant (1) according to any one of Claims 1 to 5, **characterized in that**:
- in a part of the threaded length of the dental implant (1), the dental implant (1) has an apical segment (TA), developing from the apical end (2b) in the direction of the coronal end (2a),
- the apical segment (TA) is without thread arcs (AF) having a radial setback (RR).

7. Dental implant (1) according to any one of Claims 1 to 6, **characterized in that** the threading (4) comprises a plurality of threads (F1, F2), preferably two.

8. Dental implant (1) according to any one of Claims 1 to 7, **characterized in that** three tapping grooves (R1-R3) are formed in the threading (4).

9. Dental implant (1) according to any one of Claims 1 to 8, **characterized in that** said at least two tapping grooves (R1-R3) extend over more than half of the threaded length of the dental implant (1).

10. Dental implant (1) according to any one of Claims 1 to 9, **characterized in that** said at least two tapping grooves (R1-R3) extend helically.

11. Dental implant (1) according to any one of Claims 1 to 10, **characterized in that** the core (3) is tapered at a cone angle (A3).

12. Dental implant (1) according to any one of Claims 1 to 11, **characterized in that** the threading (4) is tapered, preferably at a cone angle (A4).

13. Dental implant (1) according to any one of Claims 1 to 11, **characterized in that** the threading (4) is cylindrical.
